# EUROPEAN PATENT SPECIFICATION

(11) **EP 3 733 777 B1**
(45) Date of publication and mention of the grant of the patent: **09.12.2026**
(21) Application number: 18893604.1
(22) Date of filing: 28.12.2018
(51) Int. Cl.: C08L 77/10, C08K 3/26, C08K 7/14, C08L 23/08, C08L 23/26, C08L 51/06, C08L 77/06

(54) **POLYAMIDE RESIN COMPOSITION AND MOLDED ARTICLE COMPRISING SAME**
POLYAMIDHARZZUSAMMENSETZUNG UND FORMARTIKEL DAMIT
COMPOSITION DE RÉSINE DE POLYAMIDE ET ARTICLE MOULÉ LA COMPRENANT

(30) Priority: 31.12.2017 KR 20170185032
(43) Date of publication of application: 04.11.2020
(73) Proprietor: Lotte Chemical Corporation, Seoul, 05551 (KR)
(72) Inventor: LEE, Sang Hwa, Uiwang-Si Gyeonggi-do 16073 (KR); SEO, Yeong Deuk, Uiwang-Si Gyeonggi-do 16073 (KR); YOUM, Kyoung Tae, Uiwang-Si Gyeonggi-do 16073 (KR); HONG, Sang Hyun, Uiwang-Si Gyeonggi-do 16073 (KR)
(74) Representative: Germain Maureau
(86) International application number: PCT/KR2018/016845
(87) International publication number: WO 2019/132580

(56) References cited:
- WO-A1-2017/034295
- JP-A- 2009 073 948
- JP-A- H04 202 560
- JP-A- H06 228 407
- JP-B2- 2 695 496
- KR-A- 20170 024 201

## Description

### [Technical Field]

The present invention relates to a polyamide resin composition and a molded article comprising the same. More particularly, the present invention relates to a polyamide resin composition which has good properties in terms of plating adhesion, impact resistance, heat resistance, and appearance, and a molded article comprising the same.

### [Background Art]

Aromatic polyamide resins, such as polyphthalamide resins, are useful as materials for housings of electrical/electronic products, interior/exterior materials for automobiles, and exterior materials for construction due to lower specific gravity than glass or metal and good properties in terms of heat resistance, abrasion resistance, chemical resistance. Particularly, with the trend toward larger and lighter electric/electronic products, plastic products manufactured using such thermoplastic resins are rapidly replacing glass or metal products.

Further, in order to implement aesthetic features by providing a metallic appearance while maintaining such advantages of a polyamide resin, a technique of plating the polyamide resin has been developed. Plating of the polyamide resin is performed for the purpose of decoration and corrosion resistance, and crucial elements thereof are appearance after plating and adhesion (plating adhesion or plateability) between a plating layer and the resin.

To this end, there has been developed a method of adding an inorganic material or an epoxy group-containing polyolefin to a polyamide resin composition in order to improve plateability. However, this method has a drawback of deterioration in impact resistance of the resin composition, and thus a range of application thereof is limited. In addition, there has been proposed a method of alloying a polyamide resin with an acrylonitrile-butadiene-styrene (ABS) resin or a polycarbonate resin in order to improve plateability of the resin composition. However, this method has a problem of deterioration in heat resistance of the resin composition.

Therefore, there is a need for a polyamide resin composition which has good plating adhesion (plateability), impact resistance, heat resistance, and appearance.

The background technique of the present invention is disclosed in Korean Patent Laid-open Publication No. 10-2010-0123178 and WO2017/034295A1 which discloses a resin composition which comprises 20-70% by weight of an aromatic polyamide resin comprising at least two aromatic dicarboxylic acid units; 0.1-20% by weight of an olefin-based copolymer; and 10-60% by weight of an inorganic filler.

### [Disclosure]

### [Technical Problem]

The present invention provides a polyamide resin composition which has good properties in terms of plating adhesion, impact resistance, heat resistance, and appearance.

The present invention further provides a molded article formed of the polyamide resin composition set forth above.

The present invention will become apparent from the detailed description of the following embodiments.

### [Technical Solution]

The present invention relates to a polyamide resin composition. The polyamide resin composition comprises: 40 wt% to 60 wt% of a polyamide resin comprising 60 mol% to 80 mol% of a repeat unit represented by Formula 1 and 20 mol% to 40 mol% of a repeat unit represented by Formula 2; 0.5 wt% to 10 wt% of an ethylene-α-olefin copolymer; 0.5 wt% to 10 wt% of a maleic anhydride-modified ethylene-α-olefin copolymer obtained by graft-polymerization of maleic anhydride to an ethylene-α-olefin copolymer; 5 wt% to 15 wt% of calcium carbonate; and 20 wt% to 40 wt% of glass fibers,

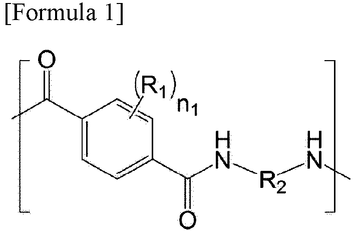

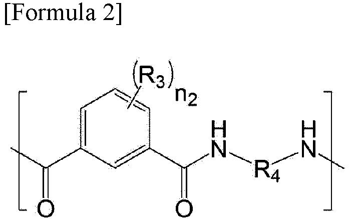

wherein R₁ and R₃ are each independently a C₁ to C₆ hydrocarbon group or a halogen atom; R₂ and R₄ are each independently a C₆ to C₁₂ linear or branched alkylene group; and n₁ and n₂ are each independently an integer of 0 to 4.

In accordance with the invention, the maleic anhydride-modified ethylene-α-olefin copolymer may comprise a maleic anhydride-modified ethylene-octene copolymer.

In accordance with the invention, the olefin copolymer and the maleic anhydride-modified olefin copolymer may be present in a weight ratio of 1:0.1 to 1:7.

In accordance with the invention, the calcium carbonate and the glass fibers may be present in a weight ratio of 1:1.5 to 1:5.

In accordance with the invention, the polyamide resin composition may have a plating adhesion strength of 10 N/cm to 30 N/cm, as measured on an injection-molded specimen having a size of 10 cm×10 cm×3.2 mm and plated with a 30 µm thick chromium layer at a peeling rate of 50 mm/min using a tensile tester in accordance with JIS C6481.

In accordance with the invention, the polyamide resin composition may have a notched Izod impact strength of 8 kgf·cm/cm or more, as measured on a 1/8" thick notched Izod specimen in accordance with ASTM D256.

In accordance with the invention, the polyamide resin composition may have a heat deflection temperature (HDT) of 280°C or higher, as measured at a heating rate of 120°C/hr under a load of 18.56 kgf/cm² in accordance with ASTM D648.

Further, the present invention relates to a molded article. The molded article comprises: a base layer; and a plating layer formed on at least one surface of the base layer, wherein the base layer is formed of the polyamide resin composition according to any one of above embodiments.

### [Advantageous Effects]

The present invention provides a polyamide resin composition which has good properties in terms of plating adhesion, impact resistance, heat resistance, and appearance, and a molded article formed of the same.

### [Description of Drawings]

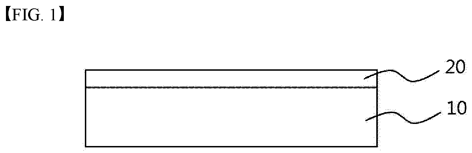

FIG. 1 is a schematic sectional view of a molded article according to one embodiment of the present invention.

### [Best Mode]

Hereinafter, exemplary embodiments of the present invention will be described in detail.

A polyamide resin composition according to the present invention comprises: (A) a polyamide resin; (B) an olefin copolymer; (C) a maleic anhydride-modified olefin copolymer; (D) calcium carbonate; and (E) glass fibers, as defined above.

As used herein to represent a specific numerical range, the expression "a to b" means "≥ a and ≤ b".

### (A) Polyamide resin

The polyamide resin according to the present invention serves to improve stiffness and heat resistance of the polyamide resin composition (or a molded article formed thereof), and comprises a repeat unit represented by Formula 1 and a repeat unit represented by Formula 2.

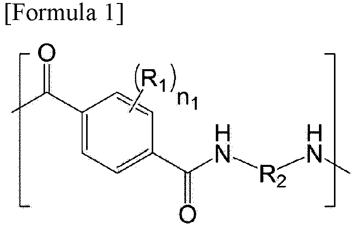

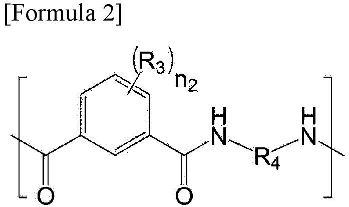

Wherein, R₁ and R₃ are each independently a C₁ to C₆ hydrocarbon group or a halogen atom; R₂ and R₄ are each independently a C₆ to C₁₂ linear or branched alkylene group; and n₁ and n₂ are each independently an integer of 0 to 4.

The polyamide resin comprises 60 mol% to 80 mol%, for example, 65 mol% to 75 mol%, of the repeat unit represented by Formula 1 and 20 mol% to 40 mol%, for example, 25 mol% to 35 mol%, of the repeat unit represented by Formula 2. Within this range, the polyamide resin composition can have good properties in terms of plating adhesion and heat resistance. Here, the aromatic polyamide resin may be prepared by reacting a dicarboxylic acid component comprising 60 mol% to 80 mol%, for example, 65 mol% to 75 mol%, of terephthalic acid having a phenyl group substituted or unsubstituted with R₁ or an alkyl ester thereof and 20 mol% to 40 mol%, for example, 25 mol% to 35 mol%, of isophthalic acid having a phenyl group substituted or unsubstituted with R₃ or an alkyl ester thereof with an aliphatic diamine component having a C₆ to C₁₂ linear or branched alkylene group (1,6-hexanediamine (hexamethylene diamine (HMDA)), 1,6-hexanediamine, 1,7-heptanediamine, 1,8-octanediamine, 1,9-nonanediamine, 1,10-decanediamine, 1,11-undecanediamine, 1,12-dodecanediamine by any suitable polymerization method known in the art.

In some embodiments, the aromatic polyamide resin may have a glass transition temperature of 100°C to 150°C, for example, 120°C to 140°C, as measured by differential scanning calorimetry (DSC). Within this range, the polyamide resin composition can have good properties in terms of heat resistance and plating adhesion.

In addition, the polyamide resin may have an intrinsic viscosity [η] of 0.7 dL/g to 1.2 dL/g, for example, 0.8 dL/g to 1.0 dL/g, as measured using an Ubbelohde viscometer at 25°C after dissolving the polyamide resin in a strong (98%) sulfuric acid solution to a concentration of 0.5 g/dL. Within this range, the polyamide resin composition can have good properties in terms of processability and appearance.

The polyamide resin is present in an amount of 40 wt% to 60 wt%, for example, 45 wt% to 58 wt%, based on the total weight of the polyamide resin composition. Specifically, the polyamide resin may be present in an amount of 40 wt%, 41 wt%, 42 wt%, 43 wt%, 44 wt%, 45 wt%, 46 wt%, 47 wt%, 48 wt%, 49 wt%, 50 wt%, 51 wt%, 52 wt%, 53 wt%, 54 wt%, 55 wt%, 56 wt%, 57 wt%, 58 wt%, 59 wt%, or 60 wt% based on the total weight of the polyamide resin composition. If the amount of the polyamide resin is less than 40 wt%, the polyamide resin composition can have poor properties in terms of plating adhesion, heat resistance, and appearance, whereas, if the amount of the polyamide resin exceeds 60 wt%, the polyamide resin composition can have poor properties in terms of plating adhesion, flowability, and injection moldability.

### (B) Olefin copolymer

The olefin copolymer according to the present invention is used in combination with the maleic anhydride-modified olefin copolymer to improve plating adhesion (plateability) between a plating layer and a molded article manufactured using the polyamide resin composition upon plating of the molded article and to improve injection moldability, impact resistance, and appearance of the polyamide resin composition, and is a copolymer of at least two olefin monomers.

Inaccordance with the invention, the olefin copolymer consists of an ethylene-α-olefin copolymer such as an ethylene-octene copolymer.

The olefin copolymer is present in an amount of 0.5 wt% to 10 wt%, for example, 1 wt% to 7 wt%, based on the total weight of the polyamide resin composition. Specifically, the olefin copolymer may be present in an amount of 0.5 wt%, 0.6 wt%, 0.7 wt%, 0.8 wt%, 0.9 wt%, 1 wt%, 2 wt%, 3 wt%, 4 wt%, 5 wt%, 6 wt%, 7 wt%, 8 wt%, 9 wt%, or 10 wt% based on the total weight of the polyamide resin composition. If the amount of the olefin copolymer is less than 0.5 wt%, the polyamide resin composition can have poor properties in terms of plating adhesion and impact resistance, whereas, if the amount of the olefin copolymer exceeds 10 wt%, the polyamide resin composition can have poor heat resistance and can suffer from blistering and thus deterioration in appearance.

### (C) Maleic anhydride-modified olefin copolymer

The maleic anhydride-modified olefin copolymer according to the present invention is a reactive olefin copolymer in which maleic anhydride, which is a functional group capable of reacting with the polyamide resin, is grafted to an olefin copolymer, and is used in combination with the (non-reactive) olefin copolymer to improve plating adhesion (plateability) between a plating layer and a molded article manufactured using the polyamide resin composition upon plating of the molded article and to improve impact resistance of the polyamide resin composition.

In accordance with the invention, the maleic anhydride-modified olefin copolymer consists of a maleic anhydride-modified ethylene-α-olefin copolymer obtained by graft-polymerization of maleic anhydride to an ethylene-α-olefin copolymer.

In some embodiments, the maleic anhydride-modified ethylene-α-olefin copolymer may comprise a maleic anhydride-modified ethylene-octene copolymer.

In some embodiments, the maleic anhydride-modified olefin copolymer may be obtained by graft-polymerization of 0.1 parts by weight to 5 parts by weight, for example, 0.5 parts by weight to 2 parts by weight of maleic anhydride to 100 parts by weight of an olefin copolymer. Within this range of amounts of the maleic anhydride and the olefin copolymer, the maleic anhydride-modified olefin copolymer can have good compatibility with the polyamide resin while improving plating adhesion of the polyamide resin composition.

The maleic anhydride-modified olefin copolymer is present in an amount of 0.5 wt% to 10 wt%, for example, 1 wt% to 7 wt%, based on the total weight of the polyamide resin composition. Specifically, the maleic anhydride-modified olefin copolymer may be present in an amount of 0.5 wt%, 0.6 wt%, 0.7 wt%, 0.8 wt%, 0.9 wt%, 1 wt%, 2 wt%, 3 wt%, 4 wt%, 5 wt%, 6 wt%, 7 wt%, 8 wt%, 9 wt%, or 10 wt% based on the total weight of the polyamide resin composition. If the amount of the maleic anhydride-modified olefin copolymer is less than 0.5 wt%, the polyamide resin composition can have poor properties in terms of plating adhesion and impact resistance, whereas, if the amount of the maleic anhydride-modified olefin copolymer exceeds 10 wt%, the polyamide resin composition can have poor properties in terms of heat resistance and stiffness.

In some embodiments, the olefin copolymer (B) and the maleic anhydride-modified olefin copolymer (C) may be present in a weight ratio (B:C) of 1:0.1 to 1:7, for example, 1:0.14 to 1:7. Specifically, the olefin copolymer (B) and the maleic anhydride-modified olefin copolymer (C) may be present in a weight ratio (B:C) of 1:0.14, 1:0.15, 1:0.16, 1:0.17, 1:0.18, 1:0.19, 1:0.2, 1:0.3, 1:0.4, 1:0.5, 1:0.6, 1:0.7, 1:0.8, 1:0.9, 1:1, 1:2, 1:3, 1:4, 1:5, 1:6, or 1:7. Within this range, the polyamide resin composition can have good properties in terms of compatibility between the components thereof and plating adhesion.

### (D) Calcium carbonate

The calcium carbonate according to the present invention serves to allow effective anchoring of a catalyst upon plating, thereby significantly improving plating adhesion of the polyamide resin composition and to improve appearance of the polyamide resin composition, and may comprise spherical or particulate calcium carbonate.

In some embodiments, the calcium carbonate may have an average particle diameter (D50, particle diameter corresponding to 50 wt% in a weight cumulative distribution of calcium carbonate particles) of 0.05 µm to 4 µm, for example, 0.1 µm to 3 µm, as measured using a particle size analyzer. Within this range, the polyamide resin composition can have good properties in terms of plating adhesion and appearance.

The calcium carbonate is present in an amount of 5 wt% to 15 wt%, for example, 8 wt% to 12 wt%, based on the total weight of the polyamide resin composition. Specifically, the calcium carbonate may be present in an amount of 5 wt%, 6 wt%, 7 wt%, 8 wt%, 9 wt%, 10 wt%, 11 wt%, or 12 wt% based on the total weight of the polyamide resin composition. If the amount of the calcium carbonate is less than 5 wt%, the polyamide resin composition can have poor plating adhesion and mechanical properties, whereas, if the amount of the calcium carbonate exceeds 15 wt%, the polyamide resin composition can have poor impact resistance.

### (E) Glass fibers

The glass fibers according to the present invention serve to improve mechanical properties (for example, stiffness) of the polyamide resin composition, and may comprise glass fibers used in typical thermoplastic resin compositions.

In some embodiments, the glass fibers have a fibrous shape which may have various cross-sections, such as circular, elliptical, and rectangular cross-sections. For example, it is desirable in terms of mechanical properties that the glass fibers have circular and/or rectangular cross-sections.

In some embodiments, the glass fibers having a circular cross-section may have a cross-sectional diameter of 5 µm to 20 µm and a pre-processing length of 2 mm to 20 mm, and the glass fibers having a rectangular cross-section may have a cross-sectional aspect ratio of 1.5 to 10 and a pre-processing length of 2 mm to 20 mm. Within these ranges, the polyamide resin composition can have improved properties in terms of stiffness and processability.

The glass fibers are present in an amount of 20 wt% to 40 wt%, for example, 25 wt% to 35 wt%, based on the total weight of the polyamide resin composition. Specifically, the glass fibers may be present in an amount of 20 wt%, 21 wt%, 22 wt%, 23 wt%, 24 wt%, 25 wt%, 26 wt%, 27 wt%, 28 wt%, 29 wt%, 30 wt%, 31 wt%, 32 wt%, 33 wt%, 34 wt%, 35 wt%, 36 wt%, 37 wt%, 38 wt%, 39 wt%, or 40 wt% based on the total weight of the polyamide resin composition. If the amount of the glass fibers is less than 20 wt%, the polyamide resin composition can have poor mechanical properties, whereas, if the amount of the glass fibers exceeds 40 wt%, the polyamide resin composition and a molded article formed of the polyamide resin composition can have poor properties in terms of appearance, extrusion processability, and plating adhesion.

In some embodiments, the calcium carbonate (D) and the glass fibers (E) may be present in a weight ratio (D:E) of 1:1.5 to 1:5, for example 1:2 to 1:5. Specifically, the calcium carbonate (D) and the glass fibers (E) may be present in a weight ratio (D:E) of 1:2, 1:3, 1:4, or 1:5. Within this range, the polyamide resin composition can have further improved properties in terms of plating adhesion and stiffness.

The polyamide resin composition according to one embodiment of the present invention may further comprise additives used in typical thermoplastic resin compositions. Examples of the additives may comprise a flame retardant, a lubricant, a plasticizer, a heat stabilizer, an antioxidant, a light stabilizer, a colorant, and mixtures thereof, without being limited thereto. When used in the polyamide resin composition, the additives may be present in amount of 0.001 parts by weight to 40 parts by weight, for example, 0.1 parts by weight to 20 parts by weight, relative to 100 parts by weight of the thermoplastic resin.

The polyamide resin composition according to one embodiment of the present invention may be prepared in pellet form by mixing the aforementioned components, followed by melt extrusion in a typical twin-screw extruder at 200°C to 350°C, for example, 250°C to 300°C.

In some embodiments, the polyamide resin composition may have a plating adhesion strength of 10 N/cm to 30 N/cm, for example, 14 N/cm to 25 N/cm, specifically 14 N/cm, 15 N/cm, 16 N/cm, 17 N/cm, 18 N/cm, 19 N/cm, 20 N/cm, 21 N/cm, 22 N/cm, 23 N/cm, 24 N/cm, or 25 N/cm, as measured on an injection-molded specimen having a size of 10 cm×10 cm×3.2 mm and plated with a 30 µm thick chromium layer at a peeling rate of 50 mm/min using a tensile tester in accordance with JIS C6481.

In some embodiments, the polyamide resin composition may have a notched Izod impact strength of 8 kgf·cm/cm or more, for example, 8 kgf·cm/cm to 15 kgf·cm/cm, specifically 8 kgf·cm/cm, 9 kgf·cm/cm, 10 kgf·cm/cm, 11 kgf·cm/cm, 12 kgf·cm/cm, 13 kgf·cm/cm, 14 kgf·cm/cm, or 15 kgf·cm/cm, as measured on a 1/8 inch (*2.54 cm) thick notched Izod specimen in accordance with ASTM D256.

In some embodiments, the polyamide resin composition may have a heat deflection temperature (HDT) of 280°C or higher, for example, 280°C to 300°C, as measured at a heating rate of 120°C/hr under a load of 18.56 kgf/cm² in accordance with ASTM D648.

FIG. 1 is a schematic sectional view of a molded article according to one embodiment of the present invention. It should be noted that the drawing is exaggerated in thickness of lines and/or size of components for descriptive convenience and clarity only. In addition, it should be understood that the present invention is not limited to the drawings and may be realized in various shapes. Referring to FIG. 1, the molded article according to this embodiment comprises: a base layer 10; and a plating layer 20 formed on at least one surface of the base layer 10, wherein the base layer 10 is formed of the polyamide resin composition according to the present invention.

In some embodiments, the base layer 10 may be formed in various shapes from the polyamide resin composition by various molding methods, such as injection molding, extrusion, vacuum forming, or casting. Such molding methods are well known to those skilled in the art.

In some embodiments, the plating layer 20 may be formed by any suitable method of manufacturing plated plastic products known in the art. For example, the plating layer 20 may be formed by etching the base layer 10 and forming an anchor on an etched region, followed by plating, for example, electroless plating and electroplating, without being limited thereto.

In other embodiments, plating may be performed by typical wet plating or dry plating, such as chemical vapor deposition (CVD), physical vapor deposition (PVD), plasma CVD, or thermal spray coating, besides electroless plating and electroplating.

In addition, a plating process according to the present disclosure may be a typical plating process applicable to a base layer formed of ABS, PC/ABS. Typically, since a base layer formed of a polyamide resin composition is likely to have a high defect rate upon etching with a typical etching solution, plating of the base layer requires a dedicated etching solution and a dedicated plating line, causing increase in manufacturing costs. However, the base layer formed of the thermoplastic resin composition according to the present invention allows plating using an existing plating line and an existing etching solution without causing such problems.

In some embodiments, the plating layer 20 may comprise at least one of chromium, nickel, and copper, and may have a thickness of 0.1 µm to 100 µm, without being limited thereto.

The molded article can exhibit good plating adhesion between the base layer and the plating layer, and can secure good properties of the base layer in terms of appearance, impact resistance, and heat resistance. Thus, the molded article can be advantageously used as metallic-appearance interior/exterior materials for automobiles, electronic/electric products, and office automation equipment.

### [Mode for Invention]

Next, the present invention will be described in more detail with reference to some examples. It should be understood that these examples are provided for illustration only and are not to be in any way construed as limiting the present invention.

### EXAMPLE

Details of components used in Examples and Comparative Examples are as follows:
(A) Polyamide resin
   (A1) Polyamide 6T/6I (manufacturer: Solvay, product name: A8002, 6T:6I (molar ratio) = 70:30, intrinsic viscosity [η]: 0.88 dL/g) was used.
   (A2) Polyamide 6T/66 (manufacturer: Solvay, product name: A6000, 6T:66 (molar ratio) = 55:44, intrinsic viscosity [η]: 0.85 dL/g) was used.
(B) Olefin copolymer
   An ethylene-octene copolymer (manufacturer: DuPont, product name: Engage 8842) was used.
(C) Modified olefin copolymer
   A maleic anhydride-modified ethylene-octene copolymer (manufacturer: DuPont, product name: Fusabond N493D) was used.
(D) Calcium carbonate (manufacturer: Omya AG, product name: 2HB, average particle diameter (D50): 4 µm) was used.
(E) Glass fibers (manufacturer: Nippon Electric Glass, product name: T-251H) was used.

### Examples 1 to 5 and Comparative Examples 1 to 5

The aforementioned components were mixed in amounts as listed in Tables 1 and 2, followed by extrusion at 300°C, thereby preparing a polyamide resin composition in pellet form. Here, extrusion was performed using a twin-screw extruder (L/D: 36, Φ: 45 mm). The prepared pellets were dried at a temperature of 80°C to 100°C for 4 hours or more and then subjected to injection molding using a 6 oz (*0.02835 kg) injection molding machine (molding temperature: 320°C, mold temperature: 130°C), thereby preparing a specimen. The prepared specimen was evaluated as to the following properties. Results are shown in Tables 1 and 2.

### Property evaluation

(1) Plating adhesion strength (unit: N/cm): Adhesion strength between a base layer and a plating layer was measured on an injection molded specimen having a size of 10 cm×10 cm×3.2 mm and plated with a 30 µm thick chromium layer at a peeling rate of 50 mm/min at a peeling angle of 90° with respect to the surface of the plating layer using a tensile tester in accordance with JIS C6481. Here, the chromium layer had a cut-out at the center thereof to be secured to a fixture of the tensile tester.
(2) Notched Izod impact strength (unit: kgf·cm/cm): Notched Izod impact strength was measured on a 1/8" thick notched Izod specimen in accordance with ASTM D256.
(3) Heat deflection temperature (HDT, unit: °C): Heat deflection temperature was measured at a heating rate of 120 °C/hr under a load of 18.56 kgf/cm² in accordance with ASTM D648.
(4) Thermal cycle evaluation: Each of the injection molded specimens (size: 10 cm×10 cm×3.2 cm) prepared in Examples and Comparative Examples was subjected to ageing in a low-temperature oven at -40°C for 1 hour, left at room temperature for 30 minutes, subjected to ageing in a constant-temperature oven at 250°C for 2 hours, and left at room temperature for 30 minutes. This procedure was repeated three times, followed by visually checking whether blisters occurred on a surface of the specimen.
(5) Surface roughness (unit: GU): Surface roughness was measured on each of the injection molded specimens (size: 10 cm×10 cm×3.2 cm) prepared in Examples and Comparative Examples at a reflection angle of 75° using a gloss meter (Micro-gloss, BYK Co., Ltd.).

**Table 1**

| | Example | | | | |
|---|---|---|---|---|---|
| | 1 | 2 | 3 | 4 | 5 |
| (A1) (wt%) | 52 | 52 | 52 | 52 | 52 |
| (A2) (wt%) | - | - | - | - | - |
| (B) (wt%) | 1 | 2 | 4 | 6 | 7 |
| (C) (wt%) | 7 | 6 | 4 | 2 | 1 |
| (D) (wt%) | 10 | 10 | 10 | 10 | 10 |
| (E) (wt%) | 30 | 30 | 30 | 30 | 30 |
| Plating adhesion strength | 14 | 19 | 21 | 16 | 16 |
| Notched Izod impact strength | 8.3 | 8.5 | 9.1 | 8.5 | 8.2 |
| Heat deflection temperature | 282 | 283 | 283 | 284 | 284 |
| Blistering | not observed | not observed | not observed | not observed | not observed |
| Surface roughness | 102 | 102 | 102 | 101 | 101 |

**Table 2**

| | Comparative Example | | | | |
|---|---|---|---|---|---|
| | 1 | 2 | 3 | 4 | 5 |
| (A1) (wt%) | 52 | 52 | 48.9 | 48.9 | - |
| (A2) (wt%) | - | - | - | - | 52 |
| (B) (wt%) | 8 | - | 0.1 | 11 | 4 |
| (C) (wt%) | - | 8 | 11 | 0.1 | 4 |
| (D) (wt%) | 10 | 10 | 10 | 10 | 10 |
| (E) (wt%) | 30 | 30 | 30 | 30 | 30 |
| Plating adhesion strength | 9 | 9 | 3 | 10 | 1 |
| Notched Izod impact strength | 7.2 | 9.4 | 5.2 | 7.4 | 8.8 |
| Heat deflection temperature | 282 | 279 | 278 | 282 | 290 |
| Blistering | observed | observed | observed | observed | observed |
| Surface roughness | 100 | 88 | 97 | 87 | 101 |

From the results shown in Table 1, it can be seen that the polyamide resin composition according to the present invention had good properties in terms of plating adhesion, impact resistance, heat resistance, and appearance, and did not undergo change in appearance, such as blistering, even after thermal cycle evaluation.

Conversely, the polyamide resin composition of Comparative Example 1, free from the maleic anhydride-modified olefin copolymer, had poor properties in terms of plating adhesion and impact resistance and suffered from blistering, and the polyamide resin composition of Comparative Example 2, free from the olefin copolymer, had poor properties in terms of plating adhesion, heat resistance, and surface roughness and suffered from blistering. **In** addition, the polyamide resin composition of Comparative Example 3, in which the weight ratio of the olefin copolymer to the maleic anhydride-modified olefin copolymer was less than the range set forth herein, had considerably reduced plating adhesion and poor heat resistance and suffered from blistering, and the polyamide resin composition of Comparative Example 4, in which the weight ratio of the olefin copolymer to the maleic anhydride-modified olefin copolymer exceeded the range set forth herein, had poor surface roughness and suffered from blistering. Further, the polyamide resin composition of Comparative Example 5, using polyamide 6T/66 (A2) instead of the polyamide resin (A1) according to the present invention, was hardly plated and suffered from blistering.

## Claims

1. A polyamide resin composition comprising:
40 wt% to 60 wt% of a polyamide resin comprising 60 mol% to 80 mol% of a repeat unit represented by Formula 1 and 20 mol% to 40 mol% of a repeat unit represented by Formula 2;
0.5 wt% to 10 wt% of an ethylene-α-olefin copolymer;
0.5 wt% to 10 wt% of a maleic anhydride-modified ethylene-α-olefin copolymer obtained by graft-polymerization of maleic anhydride to an ethylene-α-olefin copolymer;
5 wt% to 15 wt% of calcium carbonate; and
20 wt% to 40 wt% of glass fibers, 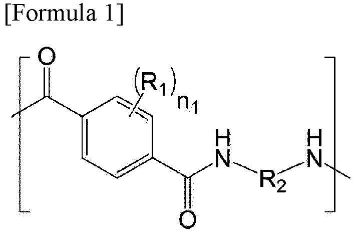 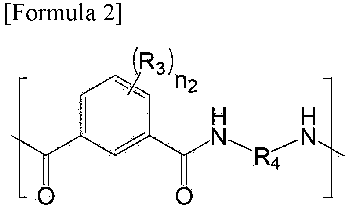
wherein R₁ and R₃ are each independently a C₁ to C₆ hydrocarbon group or a halogen atom; R₂ and R₄ are each independently a C₆ to C₁₂ linear or branched alkylene group; and n₁ and n₂ are each independently an integer of 0 to 4.

2. The polyamide resin composition according to claim 1, wherein the maleic anhydride-modified ethylene-α-olefin copolymer comprises a maleic anhydride-modified ethylene-octene copolymer.

3. The polyamide resin composition according to claim 1, wherein the olefin copolymer and the maleic anhydride-modified olefin copolymer are present in a weight ratio of 1:0.1 to 1:7.

4. The polyamide resin composition according to claim 1, wherein the calcium carbonate and the glass fibers are present in a weight ratio of 1:1.5 to 1:5.

5. The polyamide resin composition according to claim 1, wherein the polyamide resin composition has a plating adhesion strength of 10 N/cm to 30 N/cm, as measured on an injection-molded specimen having a size of 10 cm×10 cm×3.2 mm and plated with a 30 µm thick chromium layer at a peeling rate of 50 mm/min using a tensile tester in accordance with JIS C6481.

6. The polyamide resin composition according to claim 1, wherein the polyamide resin composition has a notched Izod impact strength of 8 kgf·cm/cm or more, as measured on a 1/8 inch (*2.54 cm) thick notched Izod specimen in accordance with ASTM D256.

7. The polyamide resin composition according to claim 1, wherein the polyamide resin composition has a heat deflection temperature (HDT) of 280°C or higher, as measured at a heating rate of 120°C/hr under a load of 18.56 kgf/cm² in accordance with ASTM D648.

8. A molded article comprising:
a base layer; and
a plating layer formed on at least one surface of the base layer,
wherein the base layer is formed of the polyamide resin composition according to any one of claims 1 to 7.

## Patentansprüche

1. Polyamidharzzusammensetzung, umfassend:
40 Gew.-% bis 60 Gew.-% eines Polyamidharzes, das 60 Mol-% bis 80 Mol-% einer durch Formel 1 dargestellten Wiederholungseinheit und 20 Mol-% bis 40 Mol-% einer durch Formel 2 dargestellten Wiederholungseinheit umfasst;
0,5 Gew.-% bis 10 Gew.-% eines Ethylen-α-Olefin-Copolymers;
0,5 Gew.-% bis 10 Gew.-% eines mit Maleinsäureanhydrid modifizierten Ethylen-α-Olefin-Copolymers, das durch Pfropfpolymerisation von Maleinsäureanhydrid an ein Ethylen-α-Olefin-Copolymer erhalten wird,
5 Gew.-% bis 15 Gew.-% Calciumcarbonat; und
20 Gew.-% bis 40 Gew.-% Glasfasern, 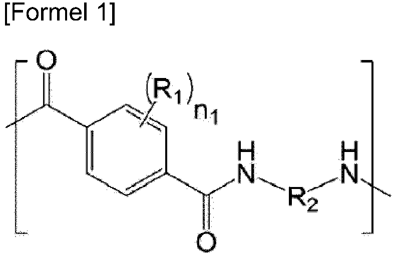 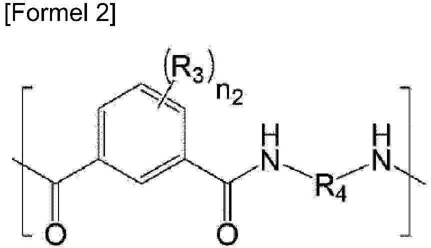
wobei R₁ und R₃ jeweils unabhängig voneinander eine C₁- bis C₆-Kohlenwasserstoffgruppe oder ein Halogenatom sind; R₂ und R₄ jeweils unabhängig voneinander eine lineare oder verzweigte C₆- bis C₁₂-Alkylengruppe sind, und n₁ und n₂ jeweils unabhängig voneinander eine ganze Zahl von 0 bis 4 sind.

2. Polyamidharzzusammensetzung nach Anspruch 1, wobei das mit Maleinsäureanhydrid modifizierte Ethylen-α-Olefin-Copolymer ein mit Maleinsäureanhydrid modifiziertes Ethylen-Octen-Copolymer umfasst.

3. Polyamidharzzusammensetzung nach Anspruch 1, wobei das Olefin-Copolymer und das mit Maleinsäureanhydrid modifizierte Olefin-Copolymer in einem Gewichtsverhältnis von 1:0,1 bis 1:7 vorliegen.

4. Polyamidharzzusammensetzung nach Anspruch 1, wobei das Calciumcarbonat und die Glasfasern in einem Gewichtsverhältnis von 1:1,5 bis 1:5 vorhanden sind.

5. Polyamidharzzusammensetzung nach Anspruch 1, wobei die Polyamidharzzusammensetzung eine Haftfestigkeit der Beschichtung von 10 N/cm bis 30 N/cm aufweist, gemessen an einer spritzgegossenen Probe mit den Abmessungen 10 cm×10 cm×3,2 mm, die mit einer 30 µm dicken Chromschicht beschichtet ist, bei einer Abziehgeschwindigkeit von 50 mm/min unter Verwendung eines Zugprüfgeräts gemäß JIS C6481.

6. Polyamidharzzusammensetzung nach Anspruch 1, wobei die Polyamidharzzusammensetzung eine Kerbschlagzähigkeit nach Izod von etwa 8 kgf·cm/cm oder mehr aufweist, gemessen an einer 1/8" (*2,54 cm) dicken Probe gemäß ASTM D256.

7. Polyamidharzzusammensetzung nach Anspruch 1, wobei die Polyamidharzzusammensetzung eine Wärmeformbeständigkeitstemperatur (HDT) von 280 °C oder höher aufweist, gemessen bei einer Heizrate von 120 °C/h unter einer Last von 18,56 kgf/cm² gemäß ASTM D648.

8. Formteil, umfassend:
eine Basisschicht; und
eine auf mindestens einer Oberfläche der Basisschicht gebildete Beschichtungsschicht,
wobei die Basisschicht aus der Polyamidharzzusammensetzung gemäß einem der Ansprüche 1 bis 7 gebildet ist.

## Revendications

1. Composition de résine polyamide comprenant :
40% en poids à 60% en poids d'une résine polyamide comprenant 60% en moles à 80% en moles d'un motif répétitif représenté par la Formule 1 et 20% en moles à 40% en moles d'un motif répétitif représenté par la Formule 2 ;
0,5% en poids à 10% en poids d'un copolymère d'éthylène-α-oléfine :
0,5% en poids à 10% en poids d'un copolymère d'éthylène-α-oléfine modifié par de l'anhydride maléique, obtenu par polymérisation par greffage d'anhydride maléique sur un copolymère d'éthylène-α-oléfine ;
5% en poids à 15% en poids de carbonate de calcium ; et
20% en poids à 40% en poids de fibres de verre, 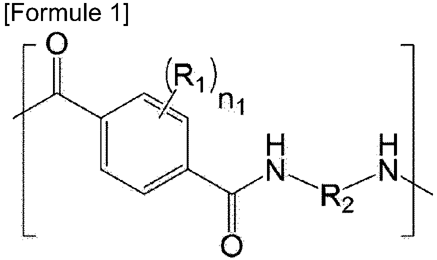 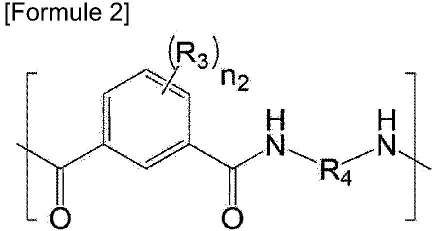
dans lesquelles R₁ et R₃ représentent chacun indépendamment un groupe hydrocarboné en C₁ à C₆ ou un atome d'halogène ; R₂ et R₄ représentent chacun indépendamment un groupe alkylène linéaire ou ramifié en C₆ à C₁₂ ; et n₁ et n₂ représentent chacun indépendamment un nombre entier de 0 à 4.

2. Composition de résine polyamide selon la revendication 1, dans laquelle le copolymère d'éthylène-α-oléfine modifié par de l'anhydride maléique comprend un copolymère d'éthylène-octène modifié par de l'anhydride maléique.

3. Composition de résine polyamide selon la revendication 1, dans laquelle le copolymère d'oléfine et le copolymère d'oléfine modifié par de l'anhydride maléique sont présents selon un rapport en poids de 1:0,1 à 1:7.

4. Composition de résine polyamide selon la revendication 1, dans laquelle le carbonate de calcium et les fibres de verre sont présents selon un rapport en poids de 1:1,5 à 1:5.

5. Composition de résine polyamide selon la revendication 1, dans laquelle la composition de résine polyamide présente une force d'adhérence du revêtement allant de 10 N/cm à 30 N/cm, telle que mesurée sur une éprouvette moulée par injection ayant une dimension de 10 cm × 10 cm × 3,2 mm et recouverte d'une couche de chrome de 30 µm d'épaisseur à une vitesse de pelage de 50 mm/min, en utilisant un appareil d'essai de traction conforme à la norme JIS C6481.

6. Composition de résine polyamide selon la revendication 1, dans laquelle la composition de résine polyamide présente une résistance au choc Izod sur barreau entaillé supérieure ou égale à 8 kgf·cm/cm, telle que mesurée sur une éprouvette Izod entaillée d'une épaisseur de 1/8 de pouce (*2,54 cm) conformément à la norme ASTM D256.

7. Composition de résine polyamide selon la revendication 1, dans laquelle la composition de résine polyamide présente une température de déflexion thermique (HDT) supérieure ou égale à 280°C, telle que mesurée à une vitesse de chauffage de 120°C/h sous une charge de 18,56 kgf/cm² conformément à la norme ASTM D648.

8. Article moulé comprenant :
une couche de base ; et
une couche de revêtement formée sur au moins une surface de la couche de base,
dans lequel la couche de base est formée de la composition de résine polyamide selon l'une quelconque des revendications 1 à 7.
